# FASCICULE DE BREVET EUROPEEN

(11) **EP 3 172 750 B1**
(45) Date de publication et mention de la délivrance du brevet: **16.06.2021**
(21) Numéro de dépôt: 15753116.1
(22) Date de dépôt: 17.07.2015
(51) Int. Cl.: H01H 23/04, H02G 3/14

(54) **ENSEMBLE DE FINITION POUR INTERRUPTEUR ELECTRIQUE ET INTERRUPTEUR ELECTRIQUE AVEC UN TEL ENSEMBLE DE FINITION**
VERKLEIDUNG FÜR ELEKTRISCHEN SCHALTER UND ELEKTRISCHER SCHALTER MIT SOLCH EINER VERKLEIDUNG
TRIM FOR ELECTRIC SWITCH AND ELECTRIC SWITCH WITH SUCH TRIM

(30) Priorité: 21.07.2014 FR 1457039
(43) Date de publication de la demande: 31.05.2017
(73) Titulaire: Legrand France, 87000 Limoges (FR); Legrand SNC, 87000 Limoges (FR)
(72) Inventeur: MINGOUT, Corinne, 87700 Aixe sur Vienne (FR); GUIBERT, Jean-Sébastien, 87510 Nieul (FR)
(74) Mandataire: Jacobacci Coralis Harle
(86) Numéro de dépôt international: PCT/FR2015/051965
(87) Numéro de publication internationale: WO 2016/012699

(56) Documents cités:
- FR-A1- 2 906 652
- GB-A- 2 387 484
- US-A- 5 189 259

## Description

### DOMAINE TECHNIQUE AUQUEL SE RAPPORTE L'INVENTION

La présente invention concerne un appareillage électrique.

Elle concerne plus particulièrement un ensemble de finition pour interrupteur électrique et un interrupteur électrique comprenant un tel ensemble de finition.

### ARRIERE-PLAN TECHNOLOGIQUE

On connaît de la demande de brevet CN201112225 un ensemble de finition pour interrupteur électrique comprenant une plaque de finition présentant une ouverture et un doigt de commande reçu dans l'ouverture.

Selon ce document, un cadre décoratif est monté dans l'ouverture, à l'avant de la plaque de finition, et porte un organe de montage du doigt de commande.

La présence du cadre décoratif nuit toutefois à l'uniformité visuelle de l'ensemble de finition ; par ailleurs, le cadre décoratif joue à la fois un rôle esthétique et un rôle mécanique, ce qui limite le choix des matériaux utilisables pour réaliser cette pièce.

Le document US 5 189 259 décrit un interrupteur encastré comprenant une boîte d'encastrement, une plaque de liaison pincée entre la boîte d'encastrement et un mécanisme monté par vis sur la boîte d'encastrement, et une plaque de façade montée à l'avant de la plaque de liaison.

### OBJET DE L'INVENTION

Dans ce contexte, la présente invention propose un ensemble de finition conforme à la revendication 1.

Ainsi, la plaque de finition est montée sur une face avant de la sous-plaque et peut masquer la sous-plaque. Le matériau de la sous-plaque peut ainsi être choisi pour ses propriétés mécaniques, notamment pour le montage de la plaque de finition et la retenue du doigt de commande, tandis que le matériau de la plaque de finition peut être choisi principalement en vue du caractère esthétique de cette pièce.

D'autres caractéristiques non limitatives et avantageuses de l'ensemble de finition sont les suivantes :
- les moyens de retenue comprennent des moyens de montage du doigt de commande sur la sous-plaque ;
- les moyens de montage sont conçus pour permettre une rotation du doigt de commande par rapport à la sous-plaque ;

- les moyens de retenue comprennent un élément formant butée arrière pour le doigt de commande ;
- l'élément formant butée arrière et une partie du doigt de commande présentent des formes cylindriques complémentaires ;
- la face avant de la sous-plaque est interrompue par endroits et la plaque de finition recouvre entièrement la face avant de la sous-plaque ;
- le doigt de commande comprend des moyens conçus pour coopérer avec un entraîneur d'un mécanisme d'appareillage.

L'invention propose également un interrupteur électrique comprenant un mécanisme d'appareillage et un ensemble de finition tel que proposé ci-dessus.

Le mécanisme d'appareillage peut notamment comprendre des moyens pour établir ou interrompre un contact électrique selon la position d'un entraîneur basculant et le doigt de commande peut alors comprendre des moyens de coopération mécanique avec ledit entraîneur basculant.

On peut prévoir également que la sous-plaque présente une paroi qui s'étend vers l'arrière avec une forme complémentaire à une forme d'un socle du mécanisme d'appareillage ; le mécanisme d'appareillage et l'ensemble de finition peuvent alors être conçus pour être assemblés par emboîtement de ladite paroi dans ledit socle.

L'invention propose aussi un interrupteur électrique comprenant un support d'appareillage et un ensemble de finition tel que proposé ci-dessus, dans lequel la sous-plaque présente une paroi qui s'étend vers l'arrière avec une forme complémentaire à une forme du support d'appareillage, le support d'appareillage et l'ensemble de finition étant conçus pour être assemblés par emboîtement de ladite paroi dans le support d'appareillage.

Le support d'appareillage peut par ailleurs être conçu pour porter un mécanisme d'appareillage. Ce mécanisme d'appareillage peut quant à lui comprendre des moyens pour établir ou interrompre un contact électrique selon la position d'un entraîneur basculant ; le doigt de commande de l'ensemble de finition peut alors comprendre des moyens de coopération mécanique avec ledit entraîneur basculant.

### DESCRIPTION DETAILLEE D'EXEMPLES DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue de face d'un mécanisme d'appareillage utilisé dans un interrupteur électrique conforme aux enseignements de l'invention ;
- la figure 2 est une vue en coupe du mécanisme d'appareillage selon le plan A-A représenté en figure 1 ;
- la figure 3 est une vue en perspective d'un entraîneur du mécanisme d'appareillage représenté aux figures 1 et 2;
- la figure 4 est une vue en éclaté montrant un ensemble de finition conforme aux enseignements de l'invention et l'entraîneur de la figure 3 ;
- la figure 5 représente l'ensemble de finition de la figure 4 assemblé, dans sa position de montage sur une paroi verticale ;
- la figure 6 représente une sous-plaque de l'élément de finition représenté sur les figures 4 et 5 ;
- la figure 7 est une première vue de détail de la sous-plaque de la figure 6;
- la figure 8 est une seconde vue de détail de la sous-plaque de la figure 6;
- la figure 9 est une vue en éclaté montrant un second exemple d'ensemble de finition ne faisant pas partie de l'invention et l'entraîneur de la figure 3 ;
- la figure 10 représente en section un doigt de commande utilisé dans l'ensemble de finition de la figure 9 ;
- la figure 11 représente l'ensemble de finition de la figure 9 assemblé, dans sa position de montage sur une paroi verticale ;
- la figure 12 est une vue en éclaté montrant un troisième exemple d'ensemble de finition ne faisant pas partie de l'invention et l'entraîneur de la figure 3 ;
- la figure 13 représente en section un doigt de commande utilisé dans l'ensemble de finition de la figure 12 ;
- la figure 14 représente l'ensemble de finition de la figure 12 assemblé, dans sa position de montage sur une paroi verticale ;
- la figure 15 est une vue en éclaté montrant une variante de réalisation d'un interrupteur électrique ;
- la figure 16 représente en perspective un support utilisé dans l'interrupteur électrique de la figure 15.

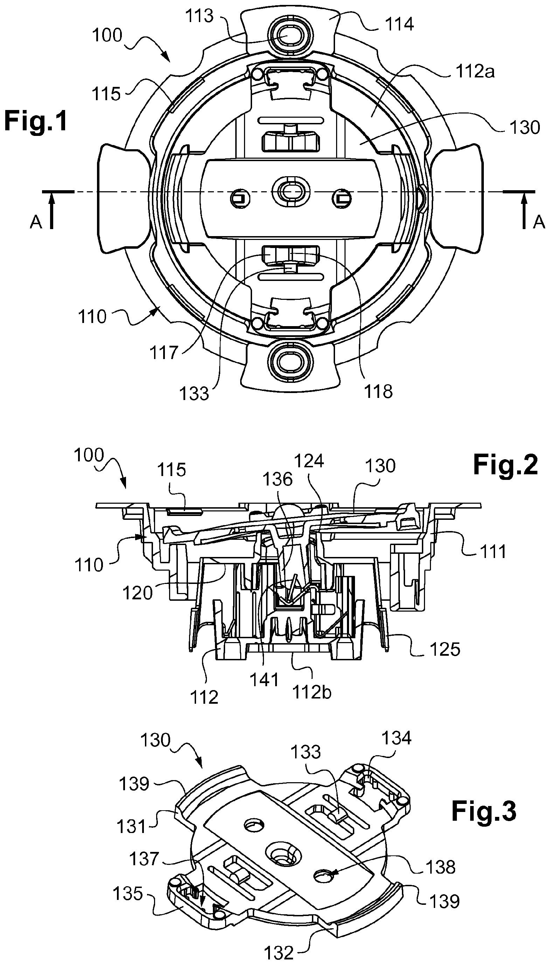

Les figures 1 et 2 représentent un mécanisme d'appareillage 100 (ici un mécanisme de commutation) d'un interrupteur électrique.

Dans la présente description, les termes « avant » et « arrière » seront utilisés par rapport à la direction du regard de l'usager vers la paroi murale sur laquelle est rapporté cet interrupteur électrique. Ainsi, lorsque le commutateur sera installé dans une pièce, l'avant désignera le côté tourné vers l'intérieur de la pièce et l'arrière désignera le côté tourné à l'opposé, vers l'extérieur de la pièce.

Le mécanisme d'appareillage 100 comprend un socle 110 isolant formant support du mécanisme d'appareillage dans un boîtier tel qu'une boîte d'encastrement, comme expliqué ci-après.

Le socle 110 comporte un corps 112 à partir duquel s'étend vers l'avant une paroi latérale 111. Ce socle 110 est ouvert à l'avant et présente un logement adapté à recevoir les autres éléments du mécanisme d'appareillage.

Le corps 112 présente une face avant 112a qui délimite ce logement avec la face intérieure de la paroi latérale 111. Le corps 112 présente également une face arrière 112b à l'opposé de la face avant 112a.

Le mécanisme d'appareillage comporte également un capot 120 qui est une pièce isolante montée dans le socle (par exemple par encliquetage) et qui retient des pièces électriques conductrices logées dans le socle 110, notamment des bornes de connexion électrique à raccorder au réseau électrique local. De manière classique, ces bornes de connexion électrique sont des bornes à connexion automatique, de sorte que chacune d'entre elles est manœuvrable par un levier de déconnexion qui traverse une ouverture pratiquée dans la paroi du socle 110 pour agir sur une lame-ressort de la borne correspondante adaptée à plaquer l'extrémité dénudée d'un conducteur électrique contre la cage de la borne de connexion. Chaque levier de déconnexion comporte une manette de commande 125, portée par le capot 120 et accessible à l'usager à l'extérieur dudit socle 110.

Le mécanisme d'appareillage 100 comporte également un balai 141 adapté à basculer autour d'un axe de basculement entre deux positions extrêmes, pour mettre en contact ou hors contact un élément de contact mobile, par exemple un grain de contact mobile porté par le balai, avec au moins un élément de contact fixe, par exemple un grain de contact fixe porté par une lame de contact raccordée électriquement à l'une des bornes de connexion électrique.

Le mécanisme d'appareillage 100 comporte également un entraîneur 130 monté basculant sur le socle 110 au moyen de deux pions 133 formés sur l'entraîneur 130 qui sont respectivement engagés dans deux paliers correspondants 118 formés dans le socle 110, par exemple au sommet de deux parties saillantes 117 du corps 112 du socle 110, réalisant ainsi un axe de basculement de l'entraîneur 130 dans le socle 110.

L'entraîneur 130 est une pièce isolante, réalisée par exemple en matière plastique par moulage, qui comprend une partie de liaison à un doigt de commande, qui s'étend dans le logement formé dans le socle 110 comme mentionné ci-dessus, et une cheminée 136 qui s'étend vers l'arrière selon une direction générale perpendiculaire à la partie de liaison, au niveau de l'axe de basculement, à travers une ouverture 124 ménagée à cet effet dans le capot 120. La partie de liaison de l'entraîneur 130 sera décrite plus en détail plus bas en référence à la figure 3.

Comme bien visible sur les figures 1 et 2, le capot 120 est donc monté dans le logement formé dans le socle 110 entre le corps 112 du socle 110 et la partie de liaison de l'entraîneur 130.

Le mécanisme d'appareillage 100 comporte enfin des moyens élastiques de basculement (non représentés), par exemple un ressort monté dans la cheminée 136 formée sur l'entraîneur 130. Ces moyens élastiques de basculement sont aptes, après franchissement d'un point dur, à solliciter le balai 141 en direction de l'une ou de l'autre de ses positions extrêmes en fonction de la position de l'entraîneur 130.

Le mécanisme d'appareillage 100 est destiné à être monté dans un boîtier (non représenté) destiné à être rapporté sur ou dans une paroi murale, selon un montage en saillie ou par encastrement de ce boîtier sur la paroi murale. Pour ce faire, le socle 110 présente des trous 113 formés respectivement dans des oreilles 114 qui s'étendent vers l'extérieur du socle 110 à partir de l'extrémité avant de la paroi latérale 111 : chacun de ces trous 113 est destiné à être traversé par le corps fileté d'une vis (dont la tête repose sur le bord du trou) destinée à être vissée dans un fût taraudé correspondant (non représenté) du boîtier (par exemple une boîte d'encastrement), ce qui permet d'assurer la fixation du mécanisme d'appareillage 100 dans le boîtier.

Comme le montrent les figures 1 et 2, la paroi latérale 111 du socle 110, ici de forme générale cylindrique, présente, à plusieurs endroits sur son pourtour intérieur, une griffe 115 destinée à coopérer avec des moyens d'ancrage d'un ensemble de finition, comme décrit plus bas, afin d'assurer le montage de l'ensemble de finition sur le mécanisme d'appareillage 100.

La figure 3 est une vue en perspective de l'entraîneur 130.

La partie de liaison de l'entraîneur 130 présente la forme générale d'un disque (dont la circonférence est pour l'essentiel concentrique avec la paroi latérale cylindrique 111) à partir duquel s'étendent quatre bras 131, 132, 134, 135.

Un premier bras 134 et un second bras 135 s'étendent respectivement de part et d'autre du disque dans la direction générale de l'axe de basculement de l'entraîneur 130 (et donc au droit d'un pion 133). Le premier bras 134 et le second bras 135 sont chacun pourvus d'un évidement 137 (ici débouchant) propre à coopérer avec une partie complémentaire d'un doigt de commande, comme expliqué plus loin.

Un troisième bras 131 et un quatrième bras 132 s'étendent quant à eux respectivement de part et d'autre du disque dans une direction générale perpendiculaire à l'axe de basculement de l'entraîneur 130. Dans l'exemple décrit, le premier bras 134, le second bras 135, le troisième bras 131 et le quatrième bras 132 sont donc régulièrement répartis sur la circonférence du disque.

Chacun des troisième et quatrième bras 131, 132 se termine à son extrémité libre par un bourrelet 139 en saillie vers l'avant.

La partie de liaison de l'entraîneur 130 présente, au niveau du disque et dans la direction générale d'extension des troisième et quatrième bras 131, 132, deux évidements 138 (ici débouchants), situés de part et d'autre du centre du disque et destinés à coopérer avec des parties complémentaires d'un doigt de commande d'un autre type que celui mentionné ci-dessus.

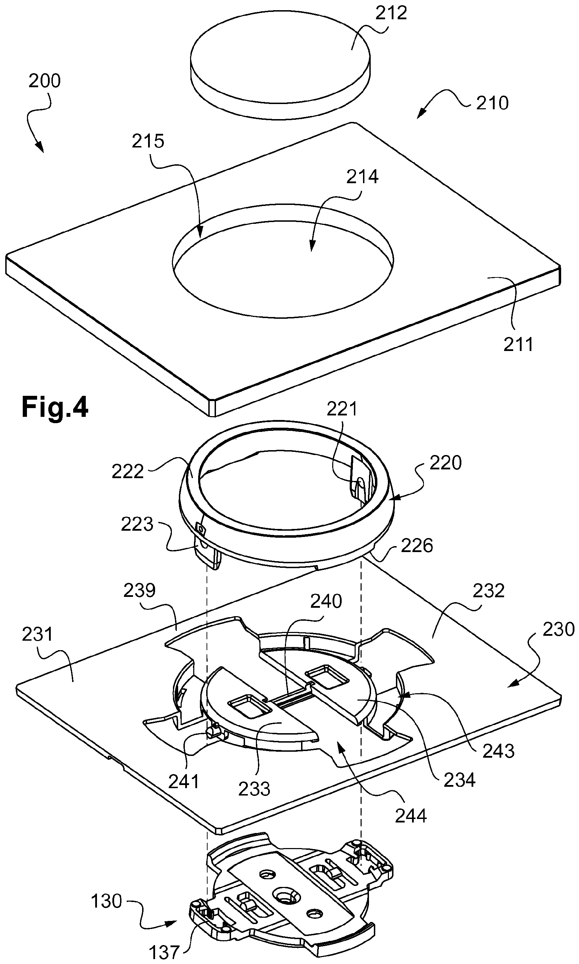

La figure 4 est une vue en éclaté montrant un ensemble de finition 200 conforme aux enseignements de l'invention et l'entraîneur 130.

L'ensemble de finition 200 comprend une plaque de finition 210, formée ici d'une partie périphérique 211 et d'une partie centrale 212 séparées, un doigt de commande 220 et une sous-plaque 230.

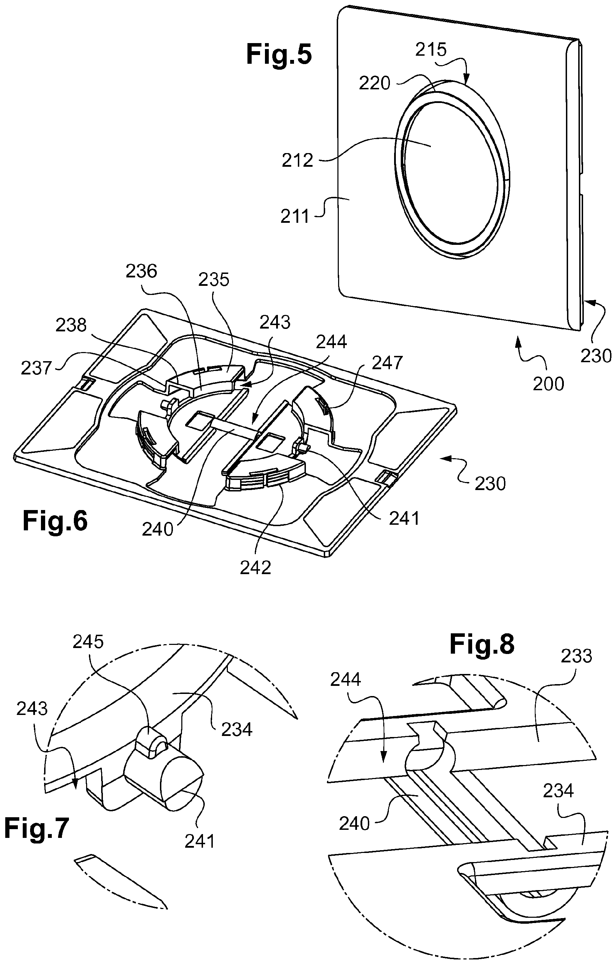

La partie périphérique 211 de la plaque de finition 210 a une forme générale extérieure de plaque parallélépipédique et présente un évidement central 214, ici circulaire dont le diamètre correspond (au jeu près) au diamètre extérieur du doigt de commande 220, ici annulaire, de sorte que l'évidement central circulaire 214 peut loger le doigt de commande annulaire 220 et, au centre de celui-ci, la partie centrale 212, ici se présentant sous la forme d'un disque, comme bien visible sur la figure 5 qui représente l'ensemble de finition assemblé.

Dans le plan général d'extension de la plaque de finition 210 (qui est parallèle au plan général d'extension de la sous-plaque 230 comme décrit ci-après), le doigt de commande 220 s'étend (en position montée comme visible en figure 5) selon une ligne qui forme une courbe fermée (en forme de cercle dans l'exemple des figures 4 et 5). En position montée et en se plaçant dans le plan d'extension générale de la plaque de finition 210, la partie centrale 212 de la plaque de finition 210 s'étend donc à l'intérieur de la courbe fermée formée par le doigt de commande 220, tandis que la partie périphérique 211 s'étend à l'extérieur de cette courbe fermée.

En d'autres termes la plaque de finition 210 comprend une ouverture (ou interstice) 215, ici un espace annulaire, définie entre le bord interne de l'évidement central de la partie périphérique 211 et le bord externe de la partie centrale 212, au travers de laquelle émerge le doigt de commande 220 annulaire.

Bien entendu, selon d'autres variantes, on pourrait prévoir que l'ouverture de la plaque de finition suive une ligne fermée carrée ou rectangulaire (ou une ligne fermée de toute autre forme, par exemple triangulaire ou ovale), le doigt de commande, qui est reçu dans cette ouverture, présentant alors une forme adaptée qui s'étend suivant une courbe fermée carrée ou rectangulaire (ou, de manière générale, de forme correspondant à celle de l'ouverture).

Comme le montre plus particulièrement la figure 4, la sous-plaque 230 comporte une face avant plane interrompue en plusieurs endroits de sorte que sont définies, dans cette face avant, deux parties latérales 231, 232 (une partie latérale gauche 231 et une partie latérale droite 232) et deux parties centrales 233, 234 (une partie centrale gauche 233 et une partie centrale droite 234).

L'ensemble formé par les deux parties centrales 233, 234 est séparé de l'ensemble formé par les deux parties latérales 231, 232 par un espace annulaire 243 dans lequel le doigt de commande annulaire 220 est reçu en position montée.

L'ensemble formé par la partie latérale gauche 231 et par la partie centrale gauche 233 est par ailleurs séparé de l'ensemble formé par la partie latérale droite 232 et par la partie centrale droite 234 par une ouverture globalement rectangulaire 244, qui est délimitée à chacune de ses deux extrémités par un bras de matière 239 reliant la partie latérale gauche 231 et la partie latérale droite 232 et qui est traversée en son centre par une portion de cylindre 240 (bien visible sur la vue de détail de la figure 8) reliant la partie centrale gauche 233 et la partie centrale droite 234.

Comme bien visible sur la figure 6 qui présente la face arrière de la sous-plaque 230, chaque partie centrale 233, 234 est en outre reliée à la partie latérale 231, 232 correspondante au moyen de deux ponts 235. Chaque pont 235 est formé d'une première paroi latérale 236 s'étendant vers l'arrière à partir de la périphérie externe de la partie centrale 233, 234 concernée, d'une seconde paroi latérale 237 s'étendant vers l'arrière à partir d'un bord interne de la partie latérale 231, 232 concernée et d'une paroi de fond 238, essentiellement parallèle à la face avant de la sous-plaque 220 et en retrait par rapport à celle-ci, et reliant la première paroi latérale 236 et la seconde paroi latérale 237.

Grâce à sa forme, chaque pont 235 permet ainsi de participer à la liaison mécanique d'une partie centrale 233, 234 à une partie latérale 231, 232, tout en laissant libre l'espace annulaire 243 mentionné ci-dessus notamment dans le plan de la face avant de la sous-plaque 230 afin de recevoir le doigt de commande annulaire 220 dans cet espace annulaire 243.

On remarque par ailleurs que, pour chaque pont 235, la surface externe de la seconde paroi latérale 237 présente des rainures 242 qui forment les moyens d'ancrage destinés à venir coopérer avec une griffe 115 correspondante du socle 110 du mécanisme d'appareillage 100 de manière à retenir l'ensemble de finition 200 sur le mécanisme d'appareillage 100 comme déjà indiqué.

À cet égard, les secondes parois latérales 237 des ponts 235 s'étendent toutes dans un cylindre de diamètre sensiblement identique à celui de la paroi latérale cylindrique 111 du socle 110 du mécanisme d'appareillage 100 de sorte que, lors du montage de l'ensemble de finition 200 sur le mécanisme d'appareillage 100, les ponts 235 s'emboîtent dans le logement formé comme indiqué plus haut par le socle 110.

Pour faciliter ce montage, on prévoit que les rainures 242 soient disposées sur des pattes élastiques 247 qui s'étendent au niveau de la surface externe de la seconde paroi latérale 237. Pour chaque pont 235, la seconde paroi latérale 237 comporte ici deux pattes élastiques 247. Ces pattes élastiques 247 s'étendent par exemple au repos légèrement au-delà du cylindre précité (correspondant au diamètre de la paroi cylindrique 111) et peuvent être ramenées par élasticité vers l'espace annulaire 243, du fait par exemple du montage de l'ensemble de finition 200 sur le mécanisme d'appareillage 100, de sorte à être en appui sur la paroi latérale cylindrique 111 du socle 110, ce qui assure le maintien de l'ensemble de finition 200 sur le mécanisme d'appareillage 100.

Malgré les interruptions de matière (espace annulaire 243, ouverture globalement rectangulaire 244), la face avant (formée notamment des parties latérales 231, 232 et des parties centrales 233, 234) s'étend sur plus de la moitié de la surface disponible du fait des dimensions de la sous-plaque 230. Autrement dit, dans le plan de la face avant de la sous-plaque 230, la surface de la face avant (principalement les parties pleines 231, 232, 233, 234) est supérieure à la surface cumulée de l'espace annulaire 243 et de l'ouverture globalement rectangulaire 244. La face avant plane de la sous-plaque 230 forme donc un bon support pour la plaque de finition 210, précisément pour la face arrière (également plane) de la plaque de finition 210, par exemple en vue d'un assemblage par collage comme expliqué plus loin.

Sur deux dents qui s'étendent vers l'arrière respectivement à partir des bords externes arrondis de la partie centrale gauche 233 et de la partie centrale droite 234 qui délimitent l'espace annulaire 243, la sous-plaque 230 comporte respectivement deux pions 241 de forme générale cylindrique (dont un est visible sur la vue de détail de la figure 7) destinés à coopérer avec des évidements correspondants 221 formés dans le doigt de commande annulaire 220 de sorte que le doigt de commande annulaire 220 puisse être monté rotatif sur la sous-plaque 230, selon un axe de rotation parallèle à la face avant de la sous-plaque 230 et qui correspond, en position montée de l'interrupteur électrique, à l'axe de basculement de l'entraîneur 130 sur le socle 110.

On prévoit par exemple en outre un ergot 245 situé à la base de chaque pion 241 afin de limiter le jeu latéral du doigt de commande annulaire 220.

Chaque partie centrale 233, 234 présente par ailleurs une fenêtre conçue pour laisser un espace libre, en position montée, pour laisser passer les deux parties saillantes 117 du corps 112 formant palier 118.

Comme nous l'avons déjà décrit précédemment, le doigt de commande 220 a une forme générale annulaire qui lui permet d'être situé, dans le plan d'extension générale de la plaque de finition 210, à l'intérieur de la partie périphérique 211 de la plaque de finition 210 et d'entourer la partie centrale 212 de la paque de finition 210.

Précisément, le doigt de commande 220 comprend un corps principal 222 formant une portion de sphère de sorte que le diamètre du corps principal 222 à son extrémité périphérique arrière (située à l'arrière de la face avant de la plaque de finition 210 en position montée) est supérieur au diamètre du corps principal 222 à son extrémité périphérique avant (située à l'avant de la face avant de la plaque de finition 210 en position montée), ce qui confère au corps principal 222 du doigt de commande 220 une forme de tonneau qui épouse au plus près la partie centrale 212 de la plaque de finition 210, en se refermant même légèrement sur celle-ci vers l'avant.

Comme le montre mieux la figure 4, le doigt de commande 220 comporte également deux pattes 223 qui s'étendent vers l'arrière à partir du corps principal 222. Dans l'exemple décrit ici, les deux évidements 221 destinés à recevoir les pions cylindriques 241 issus de la sous-plaque 230 sont respectivement formés dans les deux pattes 223.

Le doigt de commande 220 comporte enfin deux prolongements 226 qui s'étendent chacun légèrement vers l'arrière à partir du bord arrière (ici circulaire) du corps principal 222, sur une partie seulement de la circonférence du bord arrière distincte de celles portant les pattes 223.

En position montée de l'interrupteur électrique (c'est-à-dire lorsque l'ensemble de finition 200 est monté sur le mécanisme d'appareillage 100), l'extrémité arrière de chaque patte 223 est logée dans l'évidement complémentaire 137 correspondant formé comme déjà indiqué dans l'entraîneur 130 (comme illustré par les pointillés sur la figure 4) de sorte que le basculement du doigt de commande 220 par l'utilisateur (ici autour de l'axe de rotation formé par les pions cylindriques 241, alignés avec l'axe de basculement de l'entraîneur 130), qui provoque en outre un appui de l'un des prolongements 226 du doigt de commande 220 sur le bourrelet correspondant 139 de l'entraîneur 130, entraîne le basculement de l'entraîneur 130 et ainsi la commutation de l'interrupteur électrique.

Pour l'assemblage de l'ensemble de finition 200 tel que représenté sur la figure 5, la partie centrale 212 de la plaque de finition 210 est fixée (par exemple par collage) sur les parties centrales 233, 234 de la face avant de la sous-plaque 230 ; le doigt de commande annulaire 220 est ensuite monté sur la sous-plaque 230 par coopération des pions cylindriques 241 et des évidements 221 (en jouant par exemple sur l'élasticité des pattes 223 lors du montage). Enfin, la partie périphérique 211 de la plaque de finition 210 est fixée (par exemple par collage) sur les parties latérales 231, 232 de la sous-plaque 230.

L'ensemble de finition 200 peut ainsi être vendu sous forme d'un produit monobloc.

On remarque que, dans l'exemple décrit ici, la sous-plaque 230 (en l'occurrence sa face avant) et la plaque de finition 210 (ici en l'occurrence la partie périphérique 211 de la plaque de finition 210) ont quasiment les mêmes dimensions extérieures ; on peut prévoir que la plaque de finition 210 ait des dimensions (longueur, largeur) légèrement supérieures à celles de la face avant de la sous-plaque 230 afin que seule soit visible la plaque de finition 210 lorsque l'interrupteur électrique est vu de face.

L'installateur ou l'utilisateur achète par ailleurs un mécanisme d'appareillage 100 du type de celui représenté sur les figures 1 et 2 et décrit ci-dessus et monte ce mécanisme d'appareillage 100, comme déjà décrit ci-dessus dans un boîtier rapporté dans ou sur une paroi murale.

L'installateur ou l'utilisateur monte alors l'ensemble de finition 200 sur le mécanisme d'appareillage par simple emboîtement de la paroi latérale 111 du socle 110 du mécanisme d'appareillage 100 et de la paroi externe de la seconde paroi latérale 237 des ponts 235 formés à l'arrière de la sous-plaque 230 (les griffes 115 coopérant avec les rainures 242 comme déjà expliqué), ce qui permet également la coopération (déjà mentionnée) des pattes 223 du doigt de commande 220 et des évidements 137 de l'entraîneur 130 et donc la commande de la commutation de l'interrupteur électrique au moyen du doigt de commande 220.

On remarque que la plaque de finition 210 (composée de sa partie périphérique 211 et de sa partie centrale 212) recouvre totalement la face avant de la sous-plaque 230 (notamment les parties périphériques 231, 232 et les parties centrales 233, 234 de la face avant de la sous-plaque 230). En particulier, l'interstice formé entre la partie périphérique 211 et la partie centrale 212 s'étend au droit de l'espace annulaire 243 formé entre les parties centrales 233, 234 et les parties latérales 231, 232 de la face avant de la sous-plaque 230. Comme bien visible en figure 5, seule la tranche de la sous-plaque 230 est donc visible par l'utilisateur une fois l'ensemble de finition 200 monté (par l'intermédiaire du mécanisme d'appareillage 100) sur une paroi murale.

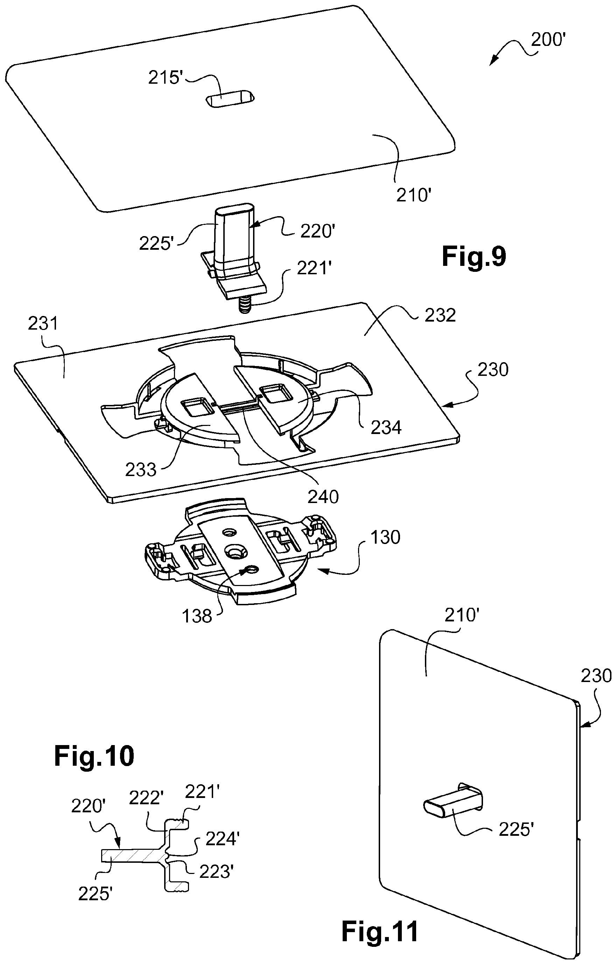

Les figures 9 et 11 représentent un second exemple d'ensemble de finition 200' ne faisant pas partie de l'invention.

Cet ensemble de finition 200' utilise une sous-plaque 230 identique à la sous-plaque utilisée dans l'ensemble de finition 200 représenté à la figure 4, ce qui est avantageux sur le plan de la production puisqu'un seul type de sous-plaque 230 suffit pour réaliser des ensembles de finition comme celui de la figure 4 et des ensembles de finition comme celui de la figure 9. La sous-plaque 230 ne sera donc pas décrite en détail à nouveau.

Outre la sous-plaque 230, l'ensemble de finition 200' représenté à la figure 9 comprend une plaque de finition 210' et un doigt de commande 220'.

Le doigt de commande 220' est représenté en section sur la figure 10 : il comporte une base 222' à partir de laquelle s'étendent vers l'avant un levier 225' et vers l'arrière deux pions 221'. Le levier 225' s'étend ici à partir d'une région centrale de la base 222', sur toute la largeur de la base 222', tandis que chaque pion 221' s'étend à partir d'une région d'extrémité de la base 222'. Dans l'exemple décrit ici, la surface externe des pions 221' est bosselée pour faciliter leur insertion et leur retenue dans les évidements 138 de l'entraîneur 130 lors du montage de l'ensemble de finition 200' sur le mécanisme d'appareillage 100 comme expliqué plus bas.

Le doigt de commande 220' présente par ailleurs, dans une face de la base 222' opposée à la face portant le levier 225', un léger renfoncement 223' situé dans la région centrale de la base 222'. Le renfoncement 223' présente une excroissance cylindrique 224' (qui s'étend sur toute la largeur de la base 222' et, dans l'exemple décrit ici, déborde même légèrement des côtés de la base 222' dans le sens de la largeur) destinée à coopérer avec la portion de cylindre 240 de la sous-plaque 230 (à propos de la portion de cylindre 240, voir le détail de la figure 8 et la description ci-dessus).

La plaque de finition 210' est de forme générale parallélépipédique et présente en son centre une ouverture oblongue 215' dont les dimensions correspondent (c'est-à-dire en pratique sont légèrement supérieures) aux dimensions du levier 225' (prises dans un plan perpendiculaire à la direction principale d'extension du levier 225').

On remarque que les dimensions de l'ouverture oblongue 215' sont en revanche inférieures aux dimensions de la base 222' du doigt de commande 220' (prises dans le plan principal d'extension de la base 222') de sorte que, lorsque le levier 225' est engagé dans l'ouverture 215' (comme dans la position assemblée de l'ensemble de finition 200' visible en figure 11), le mouvement vers l'avant du doigt de commande 220' est empêché par la base 222' (qui vient en butée contre la face arrière de la plaque de finition 210').

L'ensemble de finition 200' est assemblé en usine comme suit : la base 222' du doigt de commande 220' est disposée entre la sous-plaque 230 et la plaque de finition 210' de sorte que l'excroissance cylindrique 224' coopère avec la portion de cylindre 240 et que le levier 225' traverse l'ouverture oblongue 215'.

La plaque de finition 210' est alors fixée (par exemple par collage) sur la face avant de la sous-plaque 230, c'est-à-dire ici sur les parties latérales 231, 232 comme sur les parties centrales 233, 234 de la face avant de la sous-plaque 230.

Le doigt 220' est alors retenu entre la sous-plaque 230 et la plaque de finition 210' et l'ensemble de finition 200' peut donc être vendu comme un produit monobloc.

L'ensemble de finition 200' est conçu pour être monté sur un mécanisme d'appareillage 100 tel que celui décrit ci-dessus en référence notamment aux figures 1 et 2. En effet, comme déjà indiqué, la sous-plaque 230 de l'ensemble de finition 200' est identique à celle utilisée pour l'ensemble de finition 200 visible sur les figures 4 et 5. L'ensemble de finition 200' peut donc être monté sur le mécanisme d'appareillage 100 par coopération entre la paroi externe de la seconde paroi latérale 237 des ponts 235 (côté sous-plaque 230) et la paroi latérale 111 du socle 110 (côté mécanisme d'appareillage 100) comme déjà expliqué ci-dessus à propos du montage de l'ensemble de finition 200.

Lorsque l'ensemble de finition 200' est monté sur le mécanisme d'appareillage 100, les deux pions 221' du doigt de commande 220' sont respectivement logés dans les deux évidements 138 de l'entraîneur 130. Ainsi, par action sur le levier 225' du doigt de commande 220', l'utilisateur peut commander le basculement de l'entraîneur 130 et par conséquent la commutation de l'interrupteur électrique.

On remarque que, comme dans le cas de l'ensemble de finition 200, la plaque de finition 210' recouvre totalement la face avant de la sous-plaque 230 (notamment les parties périphériques 231, 232 et les parties centrales 233, 234 de la face avant de la sous-plaque 230). En particulier, l'ouverture oblongue 215' s'étend au droit de l'ouverture globalement rectangulaire 244 formée dans la face avant de la sous-plaque 230, au niveau de la portion de cylindre 240. Comme bien visible en figure 11, seule la tranche de la sous-plaque 230 est donc visible par l'utilisateur une fois l'ensemble de finition 200' monté (par l'intermédiaire du mécanisme d'appareillage 100) sur une paroi murale.

Par ailleurs, l'excroissance cylindrique 224' et la portion de cylindre 240 ont des formes complémentaires (le diamètre interne du cylindre de la portion de cylindre 240 correspondant au diamètre externe du cylindre de l'excroissance cylindrique 224') de sorte qu'ils définissent un axe de rotation du doigt de commande 220' par rapport à la sous-plaque 230 ; cet axe est positionné de manière à être identique à l'axe de basculement de l'entraîneur 130 dans le socle 110.

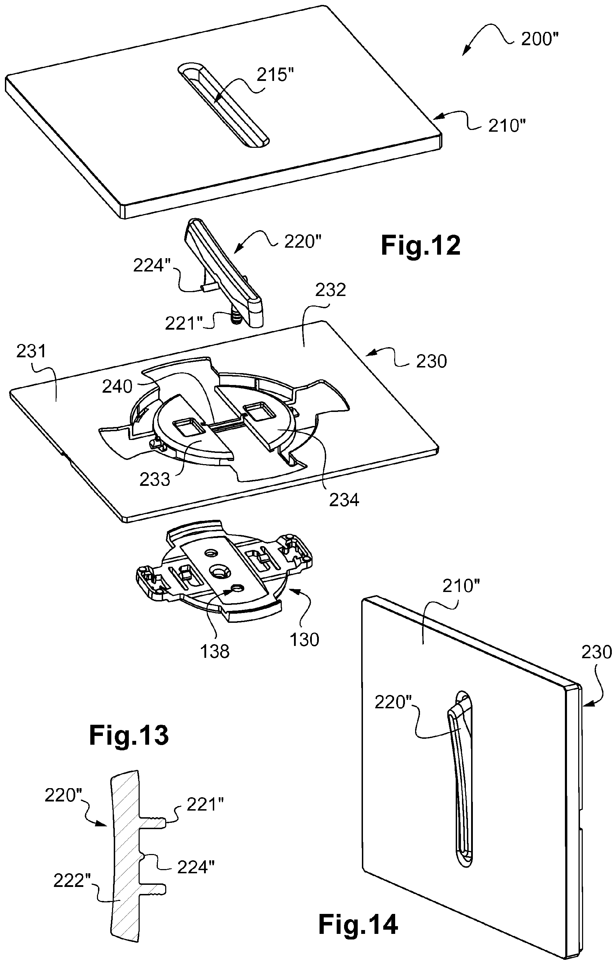

Les figures 12 et 14 représentent un troisième exemple d'ensemble de finition 200" ne faisant pas partie de l'invention.

Cet ensemble de finition 200" utilise une sous-plaque 230 identique à la sous-plaque utilisée dans l'ensemble de finition 200 représenté à la figure 4 et dans l'ensemble de finition 200' représenté à la figure 9. Comme déjà indiqué, cela est avantageux sur le plan de la production puisqu'un seul type de sous-plaque 230 suffit pour réaliser des ensembles de finition distincts, comme ceux des figure 4, 9 et 12. La sous-plaque 230 ne sera donc pas décrite en détail à nouveau.

Outre la sous-plaque 230, l'ensemble de finition 200" représenté à la figure 12 comprend une plaque de finition 210" et un doigt de commande 220".

Le doigt de commande 220" est représenté en section sur la figure 13 : il comporte un corps principal oblong 222" et présente, au niveau de la face arrière du corps principal 222", deux pions 221" et une tige cylindrique 224". Le corps principal 222" est de forme générale allongée, sa longueur s'étendant de haut en bas en position montée de l'ensemble de finition 200", comme représenté en figure 14.

La tige cylindrique 224" est située dans une région centrale du doigt de commande 220" (dans le sens de la longueur du corps principal 222") avec son axe de cylindre perpendiculaire à la longueur du corps principal 222". La tige cylindrique 224" est destinée à coopérer avec la portion de cylindre 240 de la sous-plaque 230, ici sur toute la longueur de la portion de cylindre 240, de sorte que la tige cylindrique 224" dépasse de part et d'autre de la largeur du corps principal 222".

Comme dans le précédent mode de réalisation, la surface externe des pions 221" est bosselée pour faciliter leur insertion et leur retenue dans les évidements 138 de l'entraîneur 130 lors du montage de l'ensemble de finition 200" sur le mécanisme d'appareillage 100 comme expliqué plus bas.

La plaque de finition 210" est de forme générale parallélépipédique et présente en son centre une ouverture oblongue 215" dont la longueur s'étend verticalement (lorsque l'ensemble de finition est monté sur une paroi murale verticale comme représenté en figure 14) de sorte à recevoir le corps principal 222" du doigt de commande 220". À cet effet, les dimensions de l'ouverture oblongue 215" correspondent (c'est-à-dire en pratique sont légèrement supérieures) aux dimensions du corps principal 222" du doigt de commande 220".

On remarque que la largeur de l'ouverture oblongue 215" est en revanche inférieure à la longueur de la tige cylindrique 224" (qui dépasse comme déjà indiqué de part et d'autre de la largeur du corps principal 222") de sorte que, lorsque le corps principal 222" est placé dans l'ouverture 215" (comme dans la position assemblée de l'ensemble de finition 200" visible en figure 14), le mouvement vers l'avant du doigt de commande 220" est empêché par la tige cylindrique 224" (qui vient en butée contre la face arrière de la plaque de finition 210").

L'ensemble de finition 200" est assemblé en usine comme suit : le doigt de commande 220" est disposé dans l'ouverture oblongue 215" (la tige cylindrique 224" étant située à l'arrière de la plaque de finition 210") et la sous-plaque 230 est rapportée à l'arrière de la plaque de finition 210' de sorte que la tige cylindrique 224" coopère avec la portion de cylindre 240.

La plaque de finition 210" est alors fixée (par exemple par collage) sur la face avant de la sous-plaque 230, c'est-à-dire ici sur les parties latérales 231, 232 comme sur les parties centrales 233, 234 de la face avant de la sous-plaque 230.

Le doigt de commande 220" est alors retenu entre la sous-plaque 230 et la plaque de finition 210" et l'ensemble de finition 200" peut donc être vendu comme un produit monobloc aux installateurs et aux utilisateurs. On remarque que le doigt de commande 220" est toutefois libre de pivoter autour de l'axe formé par la coopération de la tige cylindrique 224" et de la portion de cylindre 240, du fait notamment que le doigt de commande 220" est reçu, au niveau de la sous-plaque 230, dans l'ouverture globalement rectangulaire 344.

L'ensemble de finition 200" est conçu pour être monté sur un mécanisme d'appareillage 100 tel que celui décrit ci-dessus en référence notamment aux figures 1 et 2. En effet, comme déjà indiqué, la sous-plaque 230 de l'ensemble de finition 200" est identique à celle utilisée pour l'ensemble de finition 200 visible sur les figures 4 et 5. L'ensemble de finition 200" peut donc être monté sur le mécanisme d'appareillage 100 par coopération entre la paroi externe de la seconde paroi latérale 237 des ponts 235 (côté sous-plaque 230) et la paroi latérale 111 du socle 110 (côté mécanisme d'appareillage 100) comme déjà expliqué ci-dessus à propos du montage de l'ensemble de finition 200.

Lorsque l'ensemble de finition 200" est monté sur le mécanisme d'appareillage 100, les deux pions 221" du doigt de commande 220" sont respectivement logés dans les deux évidements 138 de l'entraîneur 130. Ainsi, par action sur le doigt de commande 220", l'utilisateur peut commander le basculement de l'entraîneur 130 et par conséquent la commutation de l'interrupteur électrique.

On remarque que la tige cylindrique 224" et la portion de cylindre 240 ont des formes complémentaires (le diamètre interne du cylindre de la portion de cylindre 240 correspondant au diamètre externe du cylindre de la tige cylindrique 224") de sorte qu'ils définissent un axe de rotation du doigt de commande 220" par rapport à la sous-plaque 230 ; cet axe est positionné de manière à être identique à l'axe de basculement de l'entraîneur 130 dans le socle 110.

Par ailleurs, comme dans le cas des ensembles de finition 200 et 200', la plaque de finition 210" recouvre totalement la face avant de la sous-plaque 230 (notamment les parties périphériques 231, 232 et les parties centrales 233, 234 de la face avant de la sous-plaque 230). En particulier, l'ouverture oblongue 215" s'étend au droit de l'ouverture globalement rectangulaire 244 formée dans la face avant de la sous-plaque 230 (sur la majeure partie de la longueur de celle-ci). Comme bien visible en figure 14, seule la tranche de la sous-plaque 230 est donc visible par l'utilisateur une fois l'ensemble de finition 200" monté (par l'intermédiaire du mécanisme d'appareillage 100) sur une paroi murale.

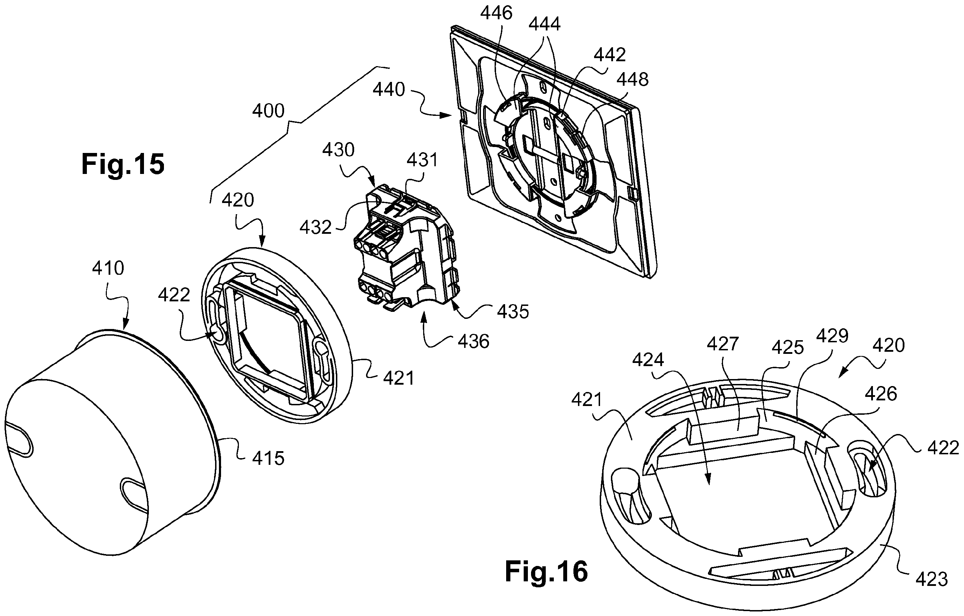

La figure 15 représente une variante de réalisation d'un interrupteur électrique conforme à l'invention.

Cet interrupteur électrique 400 comprend un support d'appareillage 420, un mécanisme d'appareillage 430 et un ensemble de finition 440. Cet ensemble de finition 440 est identique à l'ensemble de finition 200 décrit plus haut en référence aux figures 4 à 8 et ne sera donc pas décrit ici à nouveau.

Comme expliqué plus en détail ci-après, le mécanisme d'appareillage 430 et l'ensemble de finition 440 sont chacun montés sur le support d'apapreillage 420. Le support d'appareillage 420 est quant à lui monté sur une boîte d'encastrement 410 destinée à être reçue dans un évidement d'une paroi à laquelle on souhaite fixer l'interrupteur électrique 400.

Le support d'appareillage 420 est ici fixé sur la boîte d'encastrement au moyen de deux vis (non représentées) reçues dans des fûts respectivement prévus de manière diamétralement opposée sur la face interne de la paroi latérale de la boîte d'encastrement de telle sorte qu'une collerette 421 du support d'appareillage 420 est retenue par serrage entre la tête de chaque vis et des parties planes 415 dédiées de la boîte d'encastrement 410.

La collerette 421 du support d'appareillage 420 présente des orifices 422 en forme de trou de serrure avec, d'une part, une partie oblongue qui reçoit le fût fileté de chaque vis, cette partie oblongue s'étendant suivant un arrondi afin de permettre un rattrapage angulaire (grâce au déplacement du support d'appareillage 420 permis par le coulissement des fûts filetés des vis dans les parties oblongues des orifices 422), et, d'autre part, une partie d'extrémité circulaire autorisant le passage de la tête de chaque vis.

Comme pour le mécanisme d'appareillage décrit ci-dessus en référence aux figures 1 à 3, le mécanisme d'appareillage 430 comprend un entraîneur et un balai (non représentés) adaptés à basculer autour d'un axe de basculement entre deux positions extrêmes, pour mettre en contact ou hors contact un élément de contact mobile, par exemple un grain de contact mobile porté par le balai, avec au moins un élément de contact fixe, par exemple un grain de contact fixe porté par une lame de contact raccordée électriquement à l'une des bornes de connexion électrique.

L'ensemble de finition 440 comprend par ailleurs un doigt de commande (identique au doigt de commande 220 décrit plus haut en référence aux figures 4 et 5, mais non représenté en figure 15) qui présente des moyens de coopération avec l'entraîneur de sorte que le doigt de commande et l'entraîneur puissent basculer simultanément et qu'un utilisateur puisse ainsi commander la mise en contact ou hors contact précitée à l'aide du doigt de commande.

Comme bien visible en figure 16, le support d'appareillage 420 présente un corps 423 généralement annulaire, dont la face avant forme la collerette 421 déjà mentionnée.

Le corps annulaire 423 présente une face interne généralement cylindrique 425 dont le diamètre correspond au diamètre des parois latérales extérieures 442 des ponts 444 de l'ensemble de finition 440 (identiques comme déjà indiqué aux ponts 235 de l'ensemble de finition 200 bien visibles en figure 6).

La face interne 425 présente sur une partie de son bord avant une arête de clipsage 429.

Des murets 426 s'étendent à partir de la face interne 425 du corps annulaire 423, sur une partie seulement de l'épaisseur du corps annulaire 423, et définissent entre eux une ouverture centrale 424 (ici carrée) du support d'appareillage 420.

Le mécanisme d'appareillage 430 est reçu à travers l'ouverture centrale 420. Précisément, une partie avant 435 du mécanisme d'appareillage 430, de largeur supérieure à une partie arrière 436 reçue dans l'ouverture centrale 424, vient en butée contre la face avant des murets 426 (lors du montage de l'interrupteur 400).

Le mécanisme d'appareillage 430 est fixé sur le support d'appareillage 420 au moyen de deux paires de pattes de clipsage 431, 432 situées à la périphérie du mécanisme d'appareillage 430. Précisément, dans chaque paire, une patte de clipsage avant 431 vient au contact d'une face avant d'un muret 426 et une patte de clipsage arrière 432 vient au contact d'une face arrière du mêm muret 426.

Des dents 427 s'étendent à partir de la face interne 425 du corps annulaire 423, sur une partie de l'épaisseur du corps annulaire 423 distincte de celle occupée par les murets 426 (à l'avant de ceux-ci) et sur une partie seulement de la périphérie du corps annulaire 423 (les dents 427 s'étendant dans des régions où l'ensemble de finition 440 ne présente pas de pont 444 lorsque l'interrupteur 400 est assemblé).

Les dents 427 sont dimensionnées de façon à recevoir entre elles la partie avant 435 du mécanisme d'appareillage 430, qui vient en butée comme déjà indiqué sur la face avant des murets 426.

Pour le montage de l'ensemble de finition 440 sur le support d'appareillage 420, les ponts 444 de l'ensemble de finition 440 sont introduits au centre du corps annulaire 423 (chaque pont 444 étant reçu entre deux dents 427 du support d'appareillage 420), ce qui permet aux pattes élastiques 447 (identiques aux pattes élastique 247 mentionnées plus haut et visibles en figure 6) munies de rainures 448 de venir en prise sur la face interne 425 du corps annulaire 423. Précisément, ces rainures 448 viennent coopérer avec l'arête de clipsage 429 prévue comme déjà indiqué sur une partie du bord de la face interne 425 située en vis-à-vis.

Comme déjà expliqué à propos des modes de réalisation qui précèdent, par ce mouvement de montage de l'ensemble de finition 440 sur le support d'appareillage 420, le doigt de commande (non représenté) de l'ensemble de finition 440 est rendu solidaire de l'entraîneur (non représenté) du mécanisme d'appareillage grâce aux moyens de coopération déjà mentionnés (par exemple une patte sur le doigt de commande et un évidement correspondant sur l'entraîneur, comme bien visible en figure 4).

## Revendications

1. Ensemble de finition (200 ; 200' ; 200" ; 440) pour interrupteur électrique comprenant une plaque de finition (210 ; 210' ; 210") présentant une ouverture (215 ; 215' ; 215") et un doigt de commande (220 ; 220' ; 220") reçu dans l'ouverture (215 ; 215' ; 215"),
**caractérisé en ce que** l'ouverture (215) est un espace annulaire situé entre une partie centrale (212) de la plaque de finition (210) et une partie périphérique (211) de la plaque de finition (210) et **en ce que** la plaque de finition (210 ; 210' ; 210") est montée sur une face avant plane d'une sous-plaque (230) qui comporte des moyens de retenue (241 ; 240) du doigt de commande (220 ; 220' ; 220") dans l'ouverture (215 ; 215' ; 215").

2. Ensemble de finition selon la revendication 1, dans lequel les moyens de retenue comprennent des moyens de montage (241) du doigt de commande (220) sur la sous-plaque (230).

3. Ensemble de finition selon la revendication 2, dans lequel les moyens de montage (241) sont conçus pour permettre une rotation du doigt de commande (220) par rapport à la sous-plaque (230).

4. Ensemble de finition selon la revendication 1, dans lequel les moyens de retenue comprennent un élément (240) formant butée arrière pour le doigt de commande (220' ; 220").

5. Ensemble de finition selon la revendication 4, dans lequel l'élément (240) formant butée arrière et une partie (224' ; 224") du doigt de commande (220' ; 220") présentent des formes cylindriques complémentaires.

6. Ensemble de finition selon l'une des revendications 1 à 5, dans lequel la face avant de la sous-plaque (230) est interrompue par endroits et dans lequel la plaque de finition (210 ; 210' ; 210") recouvre entièrement la face avant de la sous-plaque (230).

7. Ensemble de finition selon l'une des revendications 1 à 6, dans lequel le doigt de commande (220 ; 220' ; 220") comprend des moyens (223 ; 221' ; 221") conçus pour coopérer avec un entraîneur (130) d'un mécanisme d'appareillage (100).

8. Interrupteur électrique comprenant un mécanisme d'appareillage (100) et un ensemble de finition (200 ; 200' ; 200") selon l'une des revendications 1 à 7.

9. Interrupteur électrique selon la revendication 8, dans lequel le mécanisme d'appareillage (100) comprend des moyens pour établir ou interrompre un contact électrique selon la position d'un entraîneur basculant (130) et dans lequel le doigt de commande (220 ; 220' ; 220") comprend des moyens (223 ; 221' ; 221") de coopération mécanique avec ledit entraîneur basculant (130).

10. Interrupteur électrique selon la revendication 8 ou 9, dans lequel la sous-plaque (230) présente une paroi (237) qui s'étend vers l'arrière avec une forme complémentaire à une forme d'un socle (110) du mécanisme d'appareillage (100), le mécanisme d'appareillage (100) et l'ensemble de finition (200 ; 200' ; 200") étant conçus pour être assemblés par emboîtement de ladite paroi (237) dans ledit socle (110).

11. Interrupteur électrique comprenant un support d'appareillage (420) et un ensemble de finition (440) selon l'une des revendications 1 à 7, dans lequel la sous-plaque présente une paroi (442) qui s'étend vers l'arrière avec une forme complémentaire à une forme du support d'appareillage (420), le support d'appareillage (420) et l'ensemble de finition (440) étant conçus pour être assemblés par emboîtement de ladite paroi (442) dans le support d'appareillage (420).

## Patentansprüche

1. Verkleidung (200; 200'; 200"; 440) für elektrischen Schalter mit einer eine Öffnung (215; 215'; 215") und einen in der Öffnung (215; 215'; 215") aufgenommenen Schaltfinger (220; 220'; 220") aufweisenden Abdeckplatte (210; 210'; 210"),
**dadurch gekennzeichnet, daß** die Öffnung (215) ein ringförmiger Raum ist, der zwischen einem zentralen Bereich (212) der Abdeckplatte (210) und einem Umfangsbereich (211) der Abdeckplatte (210) angeordnet ist und daß die Abdeckplatte (210; 210'; 210") auf einer ebenen Vorderseite einer Unterplatte (230) befestigt ist, die Mittel (241; 240) zum Halten des Schaltfingers (220; 220'; 220") in der Öffnung (215; 215'; 215") aufweist.

2. Verkleidung gemäß Anspruch 1, bei der die Haltemittel Mittel (241) zum Befestigen des Schaltfingers (220) auf der Unterplatte (230) aufweisen.

3. Verkleidung gemäß Anspruch 2, bei der die Befestigungsmittel (241) dazu ausgelegt sind, ein Drehen des Schaltfingers (220) gegenüber der Unterplatte (230) zu ermöglichen.

4. Verkleidung gemäß Anspruch 1, bei der die Haltemittel ein Element (240) aufweisen, das einen hinteren Anschlag für den Schaltfinger (220'; 220") bildet.

5. Verkleidung gemäß Anspruch 4, bei der das den hinteren Anschlag bildende Element (240) und ein Teil (224'; 224") des Schaltfingers (220'; 220") komplementäre zylindrische Formen aufweisen.

6. Verkleidung gemäß einem der Ansprüche 1 bis 5, bei der die Vorderseite der Unterplatte (230) stellenweise unterbrochen ist und bei der die Abdeckplatte (210; 210'; 210") die Vorderseite der Unterplatte vollständig abdeckt.

7. Verkleidung gemäß einem der Ansprüche 1 bis 6, bei der der Schaltfinger (220; 220'; 220") Mittel (223; 221'; 221") aufweist, die dazu ausgelegt sind, mit einem Antriebselement (130) eines Gerätemechanismus (100) zusammenzuwirken.

8. Elektrischer Schalter mit einem Gerätemechanismus (100) und einer Verkleidung (200; 200'; 200") gemäß einem der Ansprüche 1 bis 7.

9. Elektrischer Schalter gemäß Anspruch 8, bei dem der Gerätemechanismus (100) Mittel zum Herstellen oder Unterbrechen eines elektrischen Kontakts, je nach Stellung eines Kippantriebs (130), aufweist und bei dem der Schaltfinger (220; 220'; 220") Mittel (223; 221'; 221") zum mechanischen Zusammenwirken mit dem Kippantrieb (130) aufweist.

10. Elektrischer Schalter gemäß Anspruch 8 oder 9, bei dem die Unterplatte (230) eine Wandung (237) aufweist, die sich mit einer zu einer Form eines Sockels (110) des Gerätemechanismus (100) komplementären Form nach hinten erstreckt, wobei der Gerätemechanismus (100) und die Verkleidung (200; 200'; 200") dazu ausgelegt sind, durch Einstecken der Wandung (237) in den Sockel (110) zusammengefügt zu werden.

11. Elektrischer Schalter mit einem Geräteträger (420) und einer Verkleidung (440) gemäß einem der Ansprüche 1 bis 7, bei dem die Unterplatte eine Wandung (442) aufweist, die sich mit einer zu einer Form des Geräteträgers (420) komplementären Form nach hinten erstreckt, wobei der Geräteträger (420) und die Verkleidung (440) dazu ausgelegt sind, durch Einstecken der Wandung (442) in den Geräteträger (420) zusammengefügt zu werden.

## Claims

1. A trim unit (200; 200'; 200"; 440) for an electrical switch comprising a trim plate (210; 210'; 210") that presents an opening (215; 215'; 215") and a control member (220; 220'; 220") that is received in the opening (215; 215'; 215"),
**characterised in that** the opening (215) is an annular gap that is situated between a central portion (212) of the trim plate (210) and a peripheral portion (211) of the trim plate (210) and **in that** the trim plate (210; 210'; 210") is mounted on a plane front face of a backplate (230) that includes holder means (241; 240) for holding the control member (220; 220'; 220") in the opening (215; 215'; 215").

2. A trim unit according to claim 1, wherein the holder means include mounting means (241) for mounting the control member (220) on the backplate (230).

3. A trim unit according to claim 2, wherein the mounting means (241) are designed to enable the control member (220) to rotate relative to the backplate (230).

4. A trim unit according to claim 1, wherein the holder means include an element (240) that forms a rear abutment for the control member (220'; 220").

5. A trim unit according to claim 4, wherein the rear-abutment-forming element (240) and a portion (224'; 224") of the control member (220'; 220") present complementary cylindrical shapes.

6. A trim unit according to one of claims 1 to 5, wherein the front face of the backplate (230) is interrupted at a plurality of locations and wherein the trim plate (210; 210'; 210") covers the front face of the backplate (230) completely.

7. A trim unit according to one of claims 1 to 6, wherein the control member (220; 220'; 220") includes means that are designed to co-operate with a driver (130) of an accessory mechanism (100).

8. An electrical switch comprising an accessory mechanism (100) and a trim unit (200; 200'; 200") according to one of claims 1 to 7.

9. An electrical switch according to claim 8, wherein the accessory mechanism (100) includes means for making or breaking an electrical contact depending on the position of a rocking driver (130) and wherein the control member (220; 220'; 220") includes mechanical co-operation means (223; 221'; 221") for co-operating mechanically with said rocking driver (130).

10. An electrical switch according to claim 8 or 9, wherein the backplate (230) presents a wall (237) that extends rearwards with a shape that is complementary to a shape of a base (110) of the accessory mechanism (100), the accessory mechanism (100) and the trim unit (200; 200'; 200") being designed to be assembled by interfitting said wall (237) in said base (110).

11. An electrical switch comprising an accessory support (420) and a trim unit (440) according to one of claims 1 to 7, wherein the backplate presents a wall (442) that extends rearwards with a shape that is complementary to a shape of the accessory support (420), the accessory support (420) and the trim unit (440) being designed to be assembled by interfitting said wall (442) in the accessory support (420).
